Europäisches Patentamt

European Patent Office

Office européen des brevets

(19)

(11) Veröffentlichungsnummer: **0 183 745**
**B1**

(12) **EUROPÄISCHE PATENTSCHRIFT**

(45) Veröffentlichungstag der Patentschrift :
30.08.89

(21) Anmeldenummer : 85902514.0

(22) Anmeldetag : 09.05.85

(86) Internationale Anmeldenummer :
PCT/EP 85/00214

(87) Internationale Veröffentlichungsnummer :
WO/8505012 (21.11.85 Gazette 85/25)

(51) Int. Cl.⁴ : **A 23 G   1/04**

(54) VERFAHREN UND VORRICHTUNG ZUR KONTINUIERLICHEN VEREDELUNG VON WALZGUT ALS AUSGANGSPRO-
DUKT FÜR SCHOKOLADE.

(30) Priorität : 09.05.84 DE 3417126

(43) Veröffentlichungstag der Anmeldung :
11.06.86 Patentblatt 86/24

(45) Bekanntmachung des Hinweises auf die Patenterteilung : 30.08.89 Patentblatt 89/35

(84) Benannte Vertragsstaaten :
AT BE CH FR GB IT LI LU NL SE

(56) Entgegenhaltungen :
EP–A– 0 032 217
EP–A– 0 063 163
EP–A– 0 140 729
DE–A– 2 341 639
DE–A– 2 743 246
DE–A– 3 112 994
DE–C–   661 846
FR–A– 1 558 215
FR–A– 1 567 475
FR–A– 2 222 020
FR–A– 2 303 484
US–A– 2 070 558
US–A– 2 348 473
US–A– 2 441 861
US–A– 3 904 777
US–A– 3 955 489

(73) Patentinhaber : **Werner & Pfleiderer GmbH**
**Theodorstrasse 10**
**D-7000 Stuttgart (DE)**

(72) Erfinder : **Rapp, Rudolf, Dr.**
**Säntisstrasse 17**
**D-7770 Überlingen (DE)**

(74) Vertreter : **Kern, Wolfgang, Dipl.-Ing. et al**
**Patentanwälte Kern, Brehm & Partner Albert-Ross-**
**haupter-Strasse 73**
**D-8000 München 70 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft ein Verfahren sowie eine Vorrichtung zur Veredelung von Walzgut als Ausgangsprodukt für Schokolade, gemäß dem Oberbegriff des Anspruchs 1.

Bei der Herstellung von Schokolade wird heute noch das durch Walzenstühle zerkleinerte Gut, das fast alle Rezepturbestandteile enthält, in sogenannte Conchen eingefüllt und darin über viele Stunden verflüssigt. Dieses Verfahren erfordert für die zu seiner Durchführung notwendigen Vorrichtungselemente sehr wiel Platz und arbeitet darüberhinaus diskontinuerlich, so daß es, gemessen an dem heutigen hohen Stand der Automatisierungstechnik als veraltet angesehen werden muß. Es hat nicht an Versuchen gefehlt, das Verfahren kontinuierlich ablaufen zu lassen. Diese Versuche sind letztlich daran gescheitert, daß entweder die gefundenen Verfahrensführungen zu umständlich und damit unwirtschaftlich oder die Ergebnisse, also die Produktqualität, nicht zufriedenstellend gewesen sind.

Allen Verfahrenstechniken bei der Herstellung von Schokolade, die auf dem Conchierprinzip beruhen, ist gemeinsam, daß in großen, offenen, temperierbaren Behältern, in denen sich speziell ausgebildete mechanische Einbauten befinden, die das Gut in irgendeiner Form umwälzen, gearbeitet wird. Diese Einbauten bestehen aus verschiedenartig geformten Rühr- und Knetorganen, die sowohl dazu dienen, eine möglichst große Oberfläche des Gutes zu entwickeln, um an der Grenzfläche Gutmasse/Luft einen intensiven Stoffaustausch zu bewirken, als auch bilden sie verschiedenartig geformte Spalten, durch die die Schokoladenmasse hindurchgedrückt wird. Dadurch entstehen hohe Scherkräfte, die eine Umhüllung der Feststoffteilchen mit Kakaofett, die sogenannte Versalbung, bewirken, wodurch nicht nur ein gutes Fließverhalten, sondern auch ein guter Schmelz bei der fertigen Schokolade erzielt werden. Die erhöhte Temperatur beschleunigt den Stoffaustausch. Nach einer bestimmten Zeit des Conchierens kann die Aromaveredlung als abgeschlossen gelten.

Durch den Conchierprozess werden in einer ersten Behandlungsphase unter schonender mechanischer Beanspruchung im wesentlichen unerwünschte Aromastoffe aus dem Produkt entfernt. In einer zweiten Behandlungsphase wird dann durch verstärkte mechanische Bearbeitung die für den Schmelz notwendige Versalbung erzielt und das fur die Weiterverarbeitung erforderliche Fließverhalten eingestellt. Entscheidend dabei ist, daß die gesamte aromabildende Prozessführung einschließlich der mechanischen Behandlung zur Erzielung eines guten Fließverhaltens in verschiedene Bearbeitungsabschnitte aufgeteilt wird. So muß die rohe Kakaomasse unter Zusetzung von Wasser oder von bestimmten Reaktionslösungen vorentgast und vorveredelt werden und das so erhaltene Produkt in einer dünnen Schicht geröstet und mit Reaktionslösungen, beispielsweise Kohlehydraten, weiterveredelt werden.

Es hat sich nämlich gezeigt (EP 0032217), daß eine solche einfache Entgasung oder Röstung von Kakaomasse in einer Dünnschicht nicht ausreicht, um alle notwendigen Stoffaustauschvorgänge zwischen den Bestandteilen der Kakaomasse und den Kohlehydraten oder auch Milchbestandteilen stattfinden zu lassen. Andererseits können in der Conche keine gerichteten Reaktionen zwischen den Reaktionspartnern ablaufen, da sich in der Conche nur Zufallsberührungen zwischen den Reaktionspartnern ergeben. Außerdem ist das Conchieren der bisherigen Art ein diskontinuierliches Verfahren und deshalb nicht nur aus energetischen Gründen, sondern auch zur Erreichung einer einheitlichen Produktqualität nachteilig.

Des weiteren ist nach heutigen Erkenntnissen eine Vorentgasung der Kakaomasse oder Vorbehandlung der Milchbestandteile nicht ausreichend, um bei der späteren Verflüssigung des Gutes in einer Conche oder auch auf kontinuierlichem Wege die gewünschte Produktqualität sicherzustellen.

Die Aufgabe der Erfindung liegt deshalb darin, das Verfahren der eingangs genannten Art, bei der die Vorveredlung des Kakaoproduktes als Voraussetzung für eine spätere kontinuierliche Veredlungsverflüssigung der Schokoladenmasse angesehen wird, so weiterzuentwickeln, daß nach dem Zusammenfügen der Rezepturbestandteile und dem anschließenden Zerkleinern bei einer Oberflächenvergrößerung der Produktmasse um einen Faktor, der größer als $10^4$ ist, eine derartige Verbesserung des Stoff- und Wärmeaustausches der Reaktionsbestandteile der Kakaomasse erzielt wird, die eine kontinuierliche Verfahrensweise bei der Veredlung von Kakaomassen mit einem ausgezeichneten energetischen Wirkungsgrad bei ausgezeichneter Qualität des Endproduktes zulassen.

Die Lösung dieser Aufgabe wird erfindungsgemäß dadurch erreicht, daß das Walzgut in ein offenes, beheizbares System eingebracht wird, in dem es entgast und mit zugeführtem Gas und-/oder zugeführter Luft bei Temperaturen zwischen 80° und 120 °C innig vermischt wird und dann plastifiziert wird, und daß das plastifizierte Walzgut anschließend in ein geschlossenes System gebracht wird in dem es homogenisiert wird.

Bezüglich des vorrichtungstechnischen Teils der Erfindung wird die Aufgabenlösung darin gesehen, daß durch ein offenes System in Form eines senkrechten, trichterförmigen, das Walzgut ausbreitenden und entgasenden sowie mit Luft und/oder einem Gas begasenden Reaktors und ein sich an dieses offene System unmittelbar anschließendes geschlossenes System in Form eines Schneckenextruders zur Homogenisierung des aus dem Reaktor austretenden Walzgutes das Verfahren betrieben wird.

Ein wesentliches Verfahrensmerkmal ist somit die Gutbehandlung zunächst in einem offenen System zum Zwecke der Entgasung des Walzgutes, wobei die entstehenden Brüden sofort abgeführt werden und das Gut mit zunehmender Behandlungsdauer vorplastifiziert wird, da sich herausgestellt hat, daß für die spätere Fließfähigkeit des Produktes die vorherige Entgasung eine entscheidende Rolle spielt, worauf die Weiterbehandlung des entgasten Produktes in einem geschlossenen System zur Homogenisierung erfolgt.

Gemäß einer vorteilhaften Ausgestaltung der Erfindung läßt sich zur weiteren Verbesserung der Entgasung in dem offenen System das Walzgut während der Behandlung unter Schwerkrafteinwirkung unter Bildung einer großen Oberfläche abwärtsbewegen, wobei, gemäß einer weiteren Ausgestaltung des erfindungsgemäßen Verfahrens, die entstehenden Wrasen und Brüden mit den unerwünschten Aromastoffen sofort abgezogen werden.

Es hat sich ferner bewährt, dem plastifizierten Walzgut im geschlossenen System, in dem das Gut zur Homogenisierung der Einwirkung von Scher- und Mischelementen bei definierter aber veränderlicher Spaltweite ausgesetzt wird, Kakaofett und Lezithin und/oder flüssige Rezepturbestandteile zuzusetzen.

Zum Zweck der Homogenisierung werden innerhalb der Scherzonen und Mischzonen, die vorteilhafterweise einander abwechseln, zweckmässigerweise Temperaturen von 60 bis 80 °C aufrechterhalten.

Die Verweilzeit des Walzgutes in der Mischzone sollte wenigstens 0,3 Sekunden und die Scherdauer maximal 0,2 Sekunden betragen.

Als Spaltweiten haben sich Werte zwischen 5 und 0,5 mm als besonders günstig erwiesen.

Nach der Behandlung des Walzgutes im geschlossenen System läßt sich gegebenenfalls eine weitere Behandlung im offenen System anschließen, um bei Temperaturen zwischen 60 und 80 °C einen Konzentrationsausgleich der Komponenten der Rezeptur zu erreichen und dadurch die Fließeigenschaften des Produkts zu optimieren.

In vorrichtungstechnischer Hinsicht basiert die Erfindung auf der Kombination zweier kontinuierlich arbeitender und bezüglich der Durchsatzleistung aufeinander abgestimmter Apparate, nämlich einem als Begaser und Plastifizierer ausgebildeten Reaktor des Dünnschichttyps und einem nachgeschalteten Extruder als Homogenisator der aus dem Reaktor austretenden plastifizierten Masse.

Vorteilhafte Ausgestaltungen der erfindungsgemäßen Vorrichtungen sind in den Unteransprüchen gekennzeichnet.

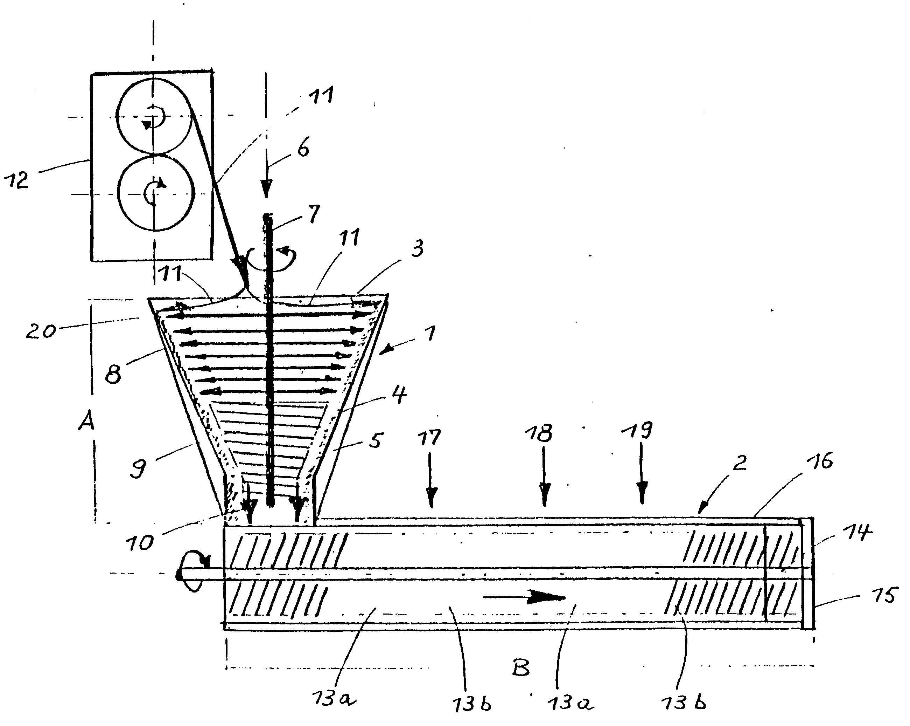

Die Erfindung wird nachfolgend anhand des in der Zeichnung dargestellten Ausführungsbeispiels, in der schematisch die Vorrichtung zur Verfahrensdurchführung wiedergegeben ist, erläutert.

Von dem Walzenstuhl 12 wird bei 11 zur Herstellung von Schokolade, insbesondere Milchschokolade, kontinuierlich ein Produkt abgenommen, dessen Basis dünnschichtgeröstete Kakaomasse ist, die unter Zugabe von Reaktionslösungen wie Wasser, Kohlehydrate und Milchbestandteilen, ein Ausgangsprodukt liefert, dessen Kohlehydratgehalt und Milchtrockenanteil bis zu 20 Gew.-% betragen. Dieses Walzgut gelangt in den senkrecht stehenden, sich nach unten zu konisch verjüngenden Reaktor 1, auf dessen Innenwand es ausgebreitet wird. Im oberen Teil dieses Reaktors befindet sich ein mit Düsen 20 versehener Rotor 8, der auf einer angetriebenen Hohlwelle 7 sitzt, durch die in Richtung des Pfeils 6 Luft oder ein Gas, beispielsweise ein Inertgas, eingeleitet wird, das dann über die Düsen 20 gegen die auf der Reaktorwandung ausgebreitete Kakaomasse geblasen wird, die vom oberen Ende 3 des Reaktors nach dem Fallprinzip abwärts läuft. Mit Hilfe der Düsen 20 wird das Walzgut begast zu dem Zweck, die in ihm enthaltenen unerwünschten Aromastoffe auszutreiben, die dann zusammen mit den entstehenden Wrasen und Brüden aus dem Reaktor 1, der ein mit A bezeichnetes offenes-System darstellt, entweichen bzw. abgezogen werden. Zu diesem Zweck ist das Reaktorgehäuse 4 mit einem beheizbaren Mantel 5 versehen, wodurch Temperaturen zwischen 80 und 120 °C in dem Walzgut erzeugtwerdenund das aus den rotierenden Düsen 20 austretende Gas mit dem abwärts wandernden dünnschichtigen Massenstrom innig vermischt wird, so daß ein sehr guter Entgasungseffekt eintritt.

Mit zunehmender Behandlungsdauer gelangt das von den rotierenden Düsen 20 überstrichene pulverförmige und teilplastifizierte Walzgut in den unteren Teil des Reaktors 1, in dem sich eine auf der rotierenden Welle 7 aufgekeilte Plastifizierschnecke 9 befindet, die das Gut bei 10 in den Schneckenextruder 2 austrägt, der bei diesem Ausführungsbeispiel als Einwellenextruder ausgebildet ist, auf dessen Welle 14 sich Scherelemente 13a und Mischelemente 13b einander abwechseln, um das durch den Extruder hindurchgetriebene Produkt beim Durchgang durch die Scherzonen und Mischzonen zu homogenisieren, bis es aus dem Mundstück 15 austritt.

Der Schneckenextruder bzw. Homogenisator stellt insofern ein geschlossenes System B dar, weil das Produkt zwischen Eintritt und Austritt weitgehend unter Luftabschluß behandelt wird. Der Extruder ist von einem beheizbaren Mantel 16 umgeben, so daß in ihm Temperaturen von 60 bis 80 °C aufrechterhaltbar bzw. einstellbar sind. In den aufeinanderfolgenden Scherzonen und Mischzonen des Homogenisators erfolgt ein ständiger Wechsel zwischen Zusammenfügen von Einzelkomponenten des Produktes während der Scherung und Oberflächenreaktion beim Vermischen in der folgenden Mischzone, wobei die Verweilzeit in jeder Mischzone wenigstens 0,3 Sekunden beträgt und die Scherdauer in der Scherzone maximal 0,2 Sekunden, und zwar bei Spaltweiten zwischen 5 und 0,5 mm, die mit zunehmender Plastifizierung und damit steigender Fließfähigkeit enger werden.

Dem plastifizierten Produkt können bei 17, 18, und 19 in den Extruder Kakaofett und Lezithin, letzteres als Emulgator, und andere flüssige Rezepturbestandteile zugeführt werden, die sich in den Scher- und Mischzonen intensiv mit der Produktmasse vermengen und die gewünschten Reaktionen bewirken, so daß dieses kontinuierliche Veredlungsverfahren zu einem qualitativ hochwertigen Endprodukt führt, wie es mit den bekannten Verfahren, wenn überhaupt, dann nur mit einem wesentlich größerem technischen und energetischen Aufwand erreichbar ist.

Nach der Behandlung des Walzgutes im geschlossenen System B läßt sich, falls gewünscht, eine weitere Behandlung im offenen System A anschließen, um bei Temperaturen zwischen 60 und 80 °C den Konzentrationsausgleich der Komponenten der Rezeptur noch zu vervollständigen und dadurch optimale Fließeigenschaften zu erreichen. Gewöhnlich jedoch reicht die Verarbeitung des Walzgutes in der oben beschriebenen Vorrichtung bei einmaligem Durchgang durch das offene System A und das geschlossene System B aus, um die gewünschte Endqualität zu erzielen.

**Patentansprüche**

1. Verfahren zur kontinuierlichen Veredelung von Walzgut als Ausgangsprodukt für Schokolade, beispielsweise Milchschokolade, bei dem als Basis für die Rezepturen dünnschichtgeröstete Kakaomasse verwendet wird, die unter Zugabe von Reaktionslösungen, wie Wasser, Kohlehydrate und Milchbestandteilen, gewonnen wird, wobei ein Kohlehydrat- und ein Milchtrockenanteil bis zu 20 Gew.-% als Ausgangsprodukt für die Herstellung der Schokolade erzielt werden, dadurch gekennzeichnet, daß das Walzgut in ein offenes, beheizbares System eingebracht wird, in dem es entgast und mit zugeführtem Gas und/oder zugeführter Luft bei Temperaturen zwischen 80° und 120 °C innig vermischt wird und dann plastifiziert wird, und daß das plastifizierte Walzgut anschließend in ein geschlossenes System gebracht wird, in dem es homogenisiert wird.

2. Verfahren nach Anspruch 1, dadurch gekennzeichnet, daß das Walzgut sich während der Behandlung in dem offenen System gemäß dem Fallprinzip nach unten bewegt.

3. Verfahren nach einem der Ansprüche 1 bis 2, dadurch gekennzeichnet, daß die entstehenden Wrasen und Brüden in denen unerwünschte Aromastoffe enthalten sind, abgezogen werden.

4. Verfahren nach einem der Ansprüche 1 bis 3, dadurch gekennzeichnet, daß mit zunehmender Behandlungsdauer im offenen System das pulverförmige und/oder teilplastifizierte Walzgut mechanisch bearbeitet und damit vollständig plastifiziert wird.

5. Verfahren nach einem der Ansprüche 1 bis 4, dadurch gekennzeichnet, daß dem plastifizierten Walzgut Kakaofett und Lezithin und/oder andere flüssige Rezepturbestandteile zugesetzt werden.

6. Verfahren nach Anspruch 5, dadurch gekennzeichnet, daß das Zusetzen von Kakaofett, Lezithin und/oder der anderen flüssigen Rezepturbestandteile im geschlossenen System vorgenommen wird.

7. Verfahren nach einem der Ansprüche 1 bis 6, dadurch gekennzeichnet, daß die Homogenisierung unter Einwirkung von Scher- und Mischelementen bei definierter aber veränderlicher Spaltweite im Schneckenextruder vorgenommen wird.

8. Verfahren nach einem der Ansprüche 1 bis 7, dadurch gekennzeichnet, daß die Verarbeitung des Gutes im Schneckenextruder bei Temperaturen von 60 bis 80 °C erfolgt und innerhalb des als Homogenisator wirkenden Extruders Scherzonen und Mischzonen einander abwechseln, wobei in jeder Mischzone zwischen den Einzelkomponenten des Gutes, die während der Scherung neu zusammengefügt worden sind, Oberflächenreaktionen stattfinden.

9. Verfahren nach einem der Ansprüche 1 bis 8, dadurch gekennzeichnet, daß die Verweilzeit in jeder Mischzone im Extruder wenigstens 0,3 Sekunden beträgt und die Scherdauer maximal 0,2 Sekunden.

10. Verfahren nach einem der Ansprüche 1 bis 9, dadurch gekennzeichnet, daß die Spaltweiten der Scherelemente im Extruder mit zunehmender Plastifizierung und damit steigender Fließfähigkeit des Gutes enger gemacht werden.

11. Verfahren nach Anspruch 10, dadurch gekennzeichnet, daß die Spaltweiten zwischen 5 und 0,5 mm betragen.

12. Verfahren nach Anspruch 11, dadurch gekennzeichnet, daß die Spaltweiten 1 mm betragen.

13. Verfahren nach einem der Ansprüche 1 bis 12, dadurch gekennzeichnet, daß nach der Behandlung des Walzgutes im geschlossenen System eine weitere Behandlung im offenen System bei Temperaturen zwischen 60 und 80 °C zur Erzielung eines Konzentrationsausgleiches der Komponenten der Rezeptur zwecks Erreichung einer optimalen Fließgrenze stattfindet.

14. Verfahren nach einem der Ansprüche 1 bis 13, dadurch gekennzeichnet, daß als Homogenisator im geschlossenen System ein Doppelschneckenextruder verwendet wird.

15. Vorrichtung zur Durchführung des Verfahrens nach einem der Ansprüche 1 bis 14, mit einem Walzenstuhl, von dem das Walzgut kontinuierlich abnehmbar ist, gekennzeichnet durch ein offenes System (A) in Form eines senkrechten, trichterförmigen, das Walzgut (11) ausbreitenden und entgasenden sowie mit Luft und/oder einem Gas begasenden Reaktor (1) und ein sich an dieses offene System (A) unmittelbar anschließendes geschlossenes System (B) in Form eines Schneckenextruders (2) zur Homogenisierung des aus dem Reaktor (1) austretenden Walzgutes (10).

16. Vorrichtung nach Anspruch 15, dadurch gekennzeichnet, daß der Reaktor (1) einen Rotor (8) aufweist, der auf einer angetriebenen, senkrechten Hohlwelle (7) sitzt und mit radialen Begasungsdüsen (20) versehen ist, und daß sich auf der Hohlwelle (7) im unteren Bereich des Reaktors eine Plastifizierschnecke (9) befindet, die das Walzgut in den Schneckenextruder (2) fördert.

17. Vorrichtung nach Anspruch 15 oder 16, dadurch gekennzeichnet, daß der Reaktor (1) ein sich nach unten in Richtung auf den Schneckenextruder (2) konisch verjüngendes Gehäuse (4) aufweist, das von einem beheizbaren Mantel (5) umgeben ist, und daß der Schneckenextruder ebenfalls von einem beheizbaren Mantel (16) umgeben ist, und Vom Walzguteintritt bis zum Walzgutaustritt aus seinem Mundstück (15) einander abwechselnde Scherzonen (13a) und Mischzonen (13b) aufweist.

18. Vorrichtung nach einem der Ansprüche 15 bis 17, dadurch gekennzeichnet, daß der Schneckenextruder (2) über seine Länge mit Dosiereinrichtungen (17, 18, 19) für die Zudosierung von Kakaofett, Lezithin und/oder anderen flüssigen Rezepturbestandteilen (17, 18, 19) versehen ist.

19. Vorrichtung nach einem· der Ansprüche 15 bis 18, dadurch gekennzeichnet, daß der Schneckenextruder zwei parallele, ineinandergreifende Extruderschnecken aufweist.

## Claims

1. A process for the continuous refining of rolling stock as the starting product for chocolate, for example milk chocolate, in which thin-layer-roasted cocoa mass is employed as basis for the formulations, which cocoa mass is obtained under the addition of reaction solutions, such as water, carbohydrates and milk components, with a carbohydrate and a milk dry proportion of up to 20 % by weight being attained as starting product for the production of the chocolate, characterized in that the rolling stock is introduced into an open, heatable system, in which it is degassed and is intimately mixed with supplied gas and/or supplied air at temperatures of between 80° and 120°C and is then plasticized, and in that said plasticized rolling stock is thereupon introduced into a closed system, in which it is homogenized.

2. A process according to claim 1, characterized in that the rolling stock during treatment in said open system moves downwardly according to the principle of falling.

3. A process according to one of the claims 1 to 2, characterized in that the resultant vapors and gases, in which undesirable aroma substances are contained, are withdrawn.

4. A process according to one of the claims 1 to 3, c h a r a c t e r i z e d in the open system, the powdery and/or partly-plasticized rolling stock is mechanically processed and, hence, completely plasticized.

5. A process according to one of the claims 1 to 4, characterized in that cocoa butter and lecithin and/or other liquid recipes components are added to the plasticed rolling stock.

6. A process according to claim 5, characterized in that the addition of cocoa butter, lecithin and/or the other liquid recipes components is carried out in the closed system.

7. A process according to one of the claims 1 to 6, characterized in that homogenization is carried out under the action of shearing and mixing elements at specified, but variable gap width in the worm extruder.

8. A process according to one of the claims 1 to 7, characterized in that the processing of the stock in the wormtype extruder takes place at temperatures of from 60° to 80 °C, and in that shearing zones and mixing zones alternate within the extruder acting as homogenizer, with surface reactions occurring in each mixing zone between the individual components of the stock, which have been newly put together during shearing.

9. A process according to on of the claims 1 to 8, characterized in that the residence time in each mixing zone in the extruder amounts to at least 0.3 seconds and the duration of shearing to maximally 0.2 seconds.

10. A process according to one of the claims 1 to 9, characterized in that the gap widths of the shearing elements in the extruder are made to be more narrow with increasing plasticizing and, hence, increasing flowability of the stock.

11. A process according to claim 10, characterized in that the gap widths are between 5 and 0.5 mm.

12. A process according to claim 11, characterized in that the gap widths are 1 mm.

13. A process according to one of the claims 1 to 12, characterized in that there takes place, after the treatment of the rolling stock in the closed system, a further treatment in the open system at temperatures of between 60° and 80 °C to attain a concentration equalization of the components of the recipes for the purpose of achieving an optimum flow limit.

14. A process according to one of the claims 1 to 13, characterized in that a double-worm extruder is used as homogenizer in the closed system.

15. An apparatus for carrying out the process according to one of the claims 1 to 14, comprising a roller frame, from which the rolling stock is adapted to be continously removed, characterized by an open system (A) in the form of a vertical, funnel-shaped reactor (1) spreading and degassing the rolling stock (11) as well as gassing it with air and/or a gas, and by a closed system (B) in the form of a worm-type extruder (2), which directly follows said open system (A) and serves to homogenize the rolling stock (10) emerging from the reactor (1).

16. An apparatus according to claim 15, characterized in that the reactor (1) includes a rotor (8) disposed on a driven, perpendicular hollow shaft (7) and provided with radial gassing nozzles (20), and in that there is disposed on the hollow shaft (7) in the lower region of the reactor a plasticizing worm (9), which conveys the rolling stock in the worm-type extruder (2).

17. An apparatus according to claim 15 or 16, characterized in that the reactor (1) includes a housing (4) tapering conically downwardly in the direction of the worm-type extruder, said housing being surrounded by a heatable sheath (5), and in that the wormtape extruder is likewise surrounded by a heatable sheat (16) and includes alternating shearing zones (13a) and mixing zones (13b) from the inlet of the rolling stock up to the outlet of the rolling stock out of its mouthpiece (15).

18. An apparatus according to one of the claims 15 to 17, characterized in that the worm-type extruder (2) is provided over its length with metering means (17, 18, 19) vor the metering-in of cocoa butter, lecithin and/or other liquid recipes components (17, 18, 19).

19. An apparatus according to one of the claims 15 to 18, characterized in that the worm-type extruder includes two parallel, interengaging extruder worms.

## Revendications

1. Procédé pour le raffinage continu de matière à extruder en tant que produit de départ pour le chocolat, chocolat au lait par exemple, dans lequel on utilise comme base de formule une pâte de chocolat torréfiée en couche mince qui est obtenue par addition de solutions réactionnelles telles qu'eau, glucide et ingrédients laiteux, une concentration de matières sèches lait et glucides pouvant aller jusqu'à 20 % en poids étant obtenue pour servir de produit de départ dans la fabrication de chocolat, caractérisé en ce que la matière à extruder est introduite dans un système ouvert pouvant être chauffé, dans lequel elle est dégazée et mélangée intimement à des températures comprises entre 80 et 120 °C avec un apport de gaz et/ou d'air, puis ramollie, et en ce que la matière ramollie est ensuite apportée dans un système fermé dans lequel elle est homogénéisée.

2. Procédé selon la revendication 1, caractérisé par le fait qu'au cours du traitement dans le système ouvert la matière à extruder se déplace vers le bas par gravité.

3. Procédé selon l'une quelconque des revendications 1 et 2, caractérisé par le fait que les buées et vapeurs qui se forment et qui contiennent des matières aromatiques indésirables sont évacuées.

4. Procédé selon l'une quelconque des revendications 1 à 3, caractérisé par le fait que la matière pulvérulente et/ou partiellement ramollie est traitée mécaniquement dans le système ouvert avec une durée croissante et de ce fait devient complètement ramollie.

5. Procédé selon l'une quelconque des revendications 1 à 4, caractérisé par le fait que l'on ajoute à la matière ramollie de la graisse de cacao et de la lécithine et/ou d'autres ingrédients liquides de la formule.

6. Procédé selon la revendication 5, caractérisé par le fait que l'addition de graisse de cacao, de lécithine et/ou d'autres ingrédients liquides de la formule se fait dans le système fermé (B).

7. Procédé selon l'une quelconque des revendications 1 à 6, caractérisé par le fait que l'homogénéisation se fait sous l'action d'éléments de cisaillage et de malaxage dans l'extrudeuse à vis avec des écartements définis mais variables.

8. Procédé selon l'une quelconque des revendications 1 à 7, caractérisé en ce que le traitement de la matière a lieu à des températures de 60 à 80 °C dans l'extrudeuse à vis servant d'homogénéisateur et dans laquelle des zones de cisaillage et de malaxage alternent entre elles et en ce que dans chacune des zones de malaxage il se produit des réactions superficielles entre les différents ingrédients de la matière qui ont été réunis à nouveau au cours du cisaillage.

9. Procédé selon l'une quelconque des revendications 1 à 8, caractérisé par le fait que la durée de séjour dans chacune des zones de malaxage de l'extrudeuse est de 0,3 seconde au moins et la durée de cisaillage de 0,2 seconde au maximum.

10. Procédé selon l'une quelconque des revendications 1 à 9, caractérisé par le fait que les écartements des éléments de cisaillage de l'extrudeuse sont réduits au fur et à mesure que le ramollissement, et donc l'aptitude à l'écoulement de la matière croît.

11. Procédé selon la revendication 10, caractérisé par le fait que les écartements atteignent de 5 à 0,5 mm.

12. Procédé selon la revendication 11, caractérisé par le fait que les écartements sont de 1 mm.

13. Procédé selon l'une quelconque des revendications 1 à 12, caractérisé par le fait qu'après traitement de la matière à laminer dans le système fermé, a lieu un traitement supplémentaire en système ouvert à des températures comprises entre 60 et 80 °C pour obtenir l'équilibrage des concentrations des ingrédients de la formule afin de parvenir à la limite d'écoulement optimale.

14. Procédé selon l'une quelconque des revendications 1 à 13, caractérisé par le fait que l'on utilise une extrudeuse à double vis pour servir d'homogénéisateur dans le système fermé.

15. Installation pour la réalisation du procédé selon l'une quelconque des revendications 1 à 14, avec un moulin à cylindres sur lequel la matière à laminer est prélevée en continu, caractérisé par un système ouvert (A) réalisé sous la forme d'un réacteur (1) vertical et en trémie, qui étale et dégaze la matière à laminer (11) avec apport d'air et/ou de gaz et d'un système fermé (B) se raccordant directement à ce système ouvert (A) sous la forme d'une extrudeuse à vis (2) pour l'homogénéisation de la matière à laminer (10) sortant du réacteur (1).

16. Installation selon la revendication 15, caractérisée en ce que le réacteur (1) présente un rotor (8) porté par un arbre creux (7), vertical et entraîné en rotation et est muni de gicleurs de gaz radiaux (20), et en ce qu'une vis de plastification (9) se trouve sur l'arbre creux (7) dans la zone inférieure du réacteur, laquelle fait progresser la matière à extruder dans l'extrudeuse à vis (2).

17. Installation selon la revendication 15 ou la revendication 16, caractérisé en ce que le réacteur (1) présente un carter (4) se rétrécissant en forme de cône vers le bas en direction de l'extrudeuse à vis (2), entouré d'une enveloppe (5) pouvant être chauffée et en ce que l'extrudeuse à vis est également entourée d'une enveloppe (16) pouvant être chauffée, et en ce qu'elle présente, entre l'entrée de la matière jusqu'à sa sortie par l'orifice (15), une alternance de zones de cisaillage (13a) et de malaxage (13b).

18. Installation selon l'une quelconque des revendications 15 à 17, caractérisée par le fait que l'extrudeuse à vis (2) est pourvue, sur sa longueur, de dispositifs de dosage (17, 18, 19) pour l'addition de graisse de cacao, de lécithine et/ou autres ingrédients liquides de la formule.

19. Installation selon l'une quelconque des revendications 15 à 18, caractérisée par le fait que l'extrudeuse à vis présente deux vis d'extrusion parallèles engrenant entre elles.